# EUROPEAN PATENT APPLICATION

(11) **EP 4 697 482 A1**
(43) Date of publication of application: **18.02.2026**
(21) Application number: 23932761.2
(22) Date of filing: 31.10.2023
(51) Int. Cl.: H01M 50/528, H01M 50/531

(54) **CURRENT COLLECTING DISK, BATTERY CELL, BATTERY PACK, AND ELECTRIC DEVICE**

(30) Priority: 14.04.2023 CN 202320962643 U
(71) Applicant: BYD Company Limited, Shenzhen, Guangdong 518118 (CN)
(72) Inventor: WANG, Guoliang, Shenzhen, Guangdong 518118 (CN); YU, Tao, Shenzhen, Guangdong 518118 (CN); PAN, Qiu, Shenzhen, Guangdong 518118 (CN); ZHANG, Da, Shenzhen, Guangdong 518118 (CN); HU, Haotian, Shenzhen, Guangdong 518118 (CN)
(74) Representative: Mathys & Squire
(86) International application number: PCT/CN2023/128593
(87) International publication number: WO 2024/212490

(57) **Abstract**

A current collector (100), a battery cell (1000), a battery pack (2000), and a power consuming apparatus (3000) are provided. A first connection region (120) of the current collector includes a middle portion (122) and a plurality of first connection portions (121) connected to the middle portion and a jelly roll. A second connection portion (131) of the current collector is electrically connected to the middle portion. The first connection region and the second connection portion have a height difference and are movable relative to each other. The second connection portion is adapted to be electrically connected to a cover plate (300).

## Description

### CROSS-REFERENCE TO RELATED APPLICATIONS

This application claims priority to Chinese Patent Application No. 2023209626439, filed on April 14, 2023 and entitled "CURRENT COLLECTOR, BATTERY CELL, BATTERY PACK, AND POWER CONSUMING APPARATUS", which is incorporated herein by reference in its entirety.

### TECHNICAL FIELD

This application pertains to the field of power apparatus technologies, and in particular, to a current collector, a battery cell, a battery pack, and a power consuming apparatus.

### BACKGROUND

In a conventional technology, a battery cell usually includes a jelly roll, a current collector, and a housing. The current collector is bent to be located between an inner side of the housing and the jelly roll. In this way, one side of the current collector is connected to the jelly roll as an integral part, and the other side of the current collector is connected to the housing to implement electrical connection between the jelly roll and the housing.

However, the bent current collector occupies a large space, and a size of the jelly roll is prone to compression, which leads to reduction in a capacity of the battery cell during actual production. In addition, during a bending process, the current collector is prone to hardening, which results in stress concentration of the current collector, and increases a possibility of fracture of the current collector.

### SUMMARY

Therefore, this application provides a current collector. The current collector is used to implement electrical connection between a jelly roll and a cover plate, and can further ensure a capacity of a battery cell and structural strength of the current collector, to facilitate increase in a capacity of the jelly roll.

The current collector according to embodiments of this application includes: a first connection region, wherein the first connection region includes a middle portion and a plurality of first connection portions, the plurality of first connection portions are sequentially arranged in a circumferential direction of the middle portion, the plurality of first connection portions are separately connected to the middle portion, and the plurality of first connection portion are adapted to be electrically connected to the jelly roll; and a second connection portion, wherein the second connection portion is located on one side of the first connection region, the second connection portion is electrically connected to the middle portion, the first connection region and the second connection portion have a height difference and are movable relative to each other, and the second connection portion is adapted to be electrically connected to the cover plate.

According to the current collector in embodiments of this application, the first connection region and the second connection portion that have the height difference are provided, and the first connection region and the second connection portion can cooperate to implement electrical connection between the jelly roll and the cover plate without bending of the current collector, to reduce bending processes and improve connection efficiency. In addition, stress concentration caused by bending of the current collector can be further avoided. In other words, fracture of the current collector can be avoided, to prolong a service life of the current collector and ensure the structural strength of the current collector. The first connection region and the second connection portion that have the height difference are used, so that space occupied by the current collector in a height direction can be further reduced, to reduce reserved space between the jelly roll and the cover plate, and ensure that there is sufficient space for arranging the jelly roll, so as to improve the capacity of the jelly roll, that is, to increase the capacity of the battery cell. In addition, the first connection region is set to include the middle portion and the plurality of first connection portions, and the middle portion is configured to support the plurality of first connection portions, to improve position stability of the plurality of first connection portions. The plurality of first connection portions can cooperate to increase a connection area between the current collector and the jelly roll, so that connection strength between the current collector and the jelly roll is improved, and a position of the current collector is stable. In addition, an overcurrent area of the current collector can be increased, to avoid problems such as insufficient overcurrents of the jelly roll and serious heat generation, so as to prolong a service life of the jelly roll. In other words, the current collector of this application occupies little space and has high connection efficiency, a long service life, a stable structure, and a large overcurrent area.

Optionally, the current collector is an integrally formed member.

Optionally, the second connection portion forms an annular structure, the second connection portion is located on a radially outer side of the first connection region in a radial direction of the second connection portion, and an inner wall of the second connection portion is connected to the middle portion by using a connecting piece.

Optionally, the first connection portion has a first surface connected to the jelly roll, the second connection portion has a second surface connected to the cover plate, and the first surface and the second surface are parallel to each other.

Optionally, the current collector further includes a connecting piece. The connecting piece is connected between the second connection portion and the middle portion. The connecting piece extends obliquely toward the second connection portion relative to the middle portion, so that the first connection region and the second connection portion have the height difference.

Optionally, a value range of an inclination angle a between the connecting piece and a first plane is 5°≤a<90°, and the first plane is perpendicular to a thickness direction of the current collector.

Optionally, an orthographic projection of an outer peripheral wall of the current collector on the first plane is located on a circle, and the first plane is perpendicular to the thickness direction of the current collector. There are a plurality of connecting pieces, and the plurality of first connection portions and the plurality of connecting pieces are alternately spaced apart in a circumferential direction of the first connection region.

Optionally, a value of a circumferential distance between the first connection portion and an adjacent connecting piece ranges from 0.5 mm to 2 mm.

Optionally, the orthographic projection of the outer peripheral wall of the current collector on the first plane is located on the circle, the first plane is perpendicular to the thickness direction of the current collector. A minimum value of a radius of the outer peripheral wall of the current collector is R₁, and a value of R₁ ranges from 10 mm to 100 mm. A maximum value of a radius of an outer peripheral wall of the first connection region is greater than or equal to half of the minimum value of the radius of the outer peripheral wall of the current collector and less than the minimum value of the radius of the outer peripheral wall of the current collector. That is, the maximum value R₂ of the radius of the outer peripheral wall of the first connection region and R₁ meet the following condition: ½R₁≤R₂<R₁.

Optionally, a radial width of the second connection portion is W₁. The radial width of the second connection portion is greater than or equal to 1 mm and less than or equal to half of the minimum value of the radius of the outer peripheral wall of the current collector, that is, 1 mm≤W₁≤½R₁.

Optionally, the orthographic projection of the outer peripheral wall of the current collector on the first plane is located on the circle, and the first plane is perpendicular to the thickness direction of the current collector. The second connection portion is provided with a stop protrusion extending toward the first connection portion, the stop protrusion is located on a radially outer side of the first connection portion, and the stop protrusion is adapted to be located on a radially outer side of a tab of the jelly roll.

Optionally, the stop protrusion is defined through bending and deformation of a part of the second connection portion.

Optionally, a reinforcement portion is provided on an outer periphery of the stop protrusion.

Optionally, there are a plurality of reinforcement portions, and the plurality of reinforcement portions are spaced apart to form an avoidance port between two adjacent reinforcement portions for gas flow.

Optionally, the middle portion is provided with a liquid injection port that extends through the middle portion in a thickness direction of the middle portion.

Optionally, a first limiting portion is provided on the second connection portion, and the first limiting portion is adapted to be in limiting fit with a second limiting portion on the cover plate.

A battery cell according to embodiments of this application includes: a casing, wherein an accommodation cavity with an opening is formed in the casing; a jelly roll and a cover plate, wherein the jelly roll is disposed in the accommodation cavity, and the cover plate is disposed at the opening; and a current collector, wherein the current collector is the foregoing current collector, the current collector is disposed between the jelly roll and the cover plate, the first connection portion is electrically connected to the jelly roll, the second connection portion is electrically connected to the cover plate, and the cover plate is adapted to drive the second connection portion to move relative to the first connection region.

The battery cell according to embodiments of this application uses the foregoing current collector, and uses the cover plate to drive the second connection portion to move relative to the first connection region, so that the current collector can be effectively used to implement electrical connection between the jelly roll and the cover plate, and a capacity of the battery cell can be increased. In addition, problems such as insufficient overcurrents of the jelly roll and serious heat generation can be avoided, to prolong a service life of the battery cell.

Optionally, the orthographic projection of the outer peripheral wall of the current collector on the first plane is located on the circle, the first plane is perpendicular to the thickness direction of the current collector, the second connection portion is provided with the stop protrusion extending toward the first connection portion, the stop protrusion is located on the radially outer side of the first connection portion, and the stop protrusion is located on the radially outer side of the tab of the jelly roll.

A battery pack according to embodiments of this application includes a plurality of the foregoing battery cells.

The battery pack according to embodiments of this application uses the foregoing battery cells, so that a capacity of the battery pack can be increased, use safety of the battery pack can be improved, and a service life of the battery pack can be prolonged.

A power consuming apparatus according to embodiments of this application includes the foregoing battery pack.

The power consuming apparatus according to embodiments of this application uses the foregoing battery pack, so that assembly efficiency of the power consuming apparatus can be improved, use safety of the power consuming apparatus can be improved, a service life of the power consuming apparatus can be prolonged, and use costs can be reduced.

Additional aspects and advantages of this application will become clear in the following description or will be learned from the practice of this application.

### BRIEF DESCRIPTION OF DRAWINGS

The above and/or additional aspects and advantages of this application will become clear and readily understood from the description of embodiments with reference to the following accompanying drawings.
FIG. 1 is a schematic diagram of a structure of a current collector according to some embodiments of this application;
FIG. 2 is a top view of a current collector according to some embodiments of this application;
FIG. 3 is a side view of a current collector according to some embodiments of this application;
FIG. 4 is a locally enlarged view of a region I in FIG. 3;
FIG. 5 is a schematic diagram of comparison of a second connection portion before and after movement according to some embodiments of this application;
FIG. 6 is a sectional view of a battery cell according to some embodiments of this application;
FIG. 7 is a top view of a current collector according to other embodiments of this application;
FIG. 8 is a schematic diagram of cooperation between a current collector and a cover plate according to other embodiments of this application; and
FIG. 9 is a schematic diagram of a power consuming apparatus according to some embodiments of this application.

### Reference numerals:

1000: battery cell; 100: current collector; 120: first connection region; 121: first connection portion; 122: middle portion; 1221: liquid injection port; 1222: penetration port; 1223: positioning port; 131: second connection portion; 1311: reinforcement portion; 1312: avoidance port; 1313: stop protrusion; 132: first limiting portion; 140: connecting piece; 200: jelly roll; 300: cover plate; 310: second limiting portion; 400: casing; 2000: battery pack; 3000: power consuming apparatus.

### DESCRIPTION OF EMBODIMENTS

Embodiments of this application are described in detail below, and examples of the embodiments are shown in the accompanying drawings. In the accompanying drawings, same or similar reference numerals constantly indicate same or similar elements or elements having same or similar functions. The following embodiments described with reference to the accompanying drawings are examples, and are merely intended to explain this application, but should not be construed as a limitation on this application.

The following describes a current collector 100 in embodiments of this application with reference to the accompanying drawings of this specification.

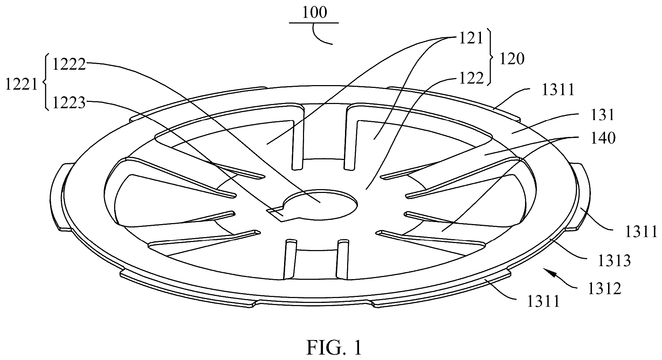

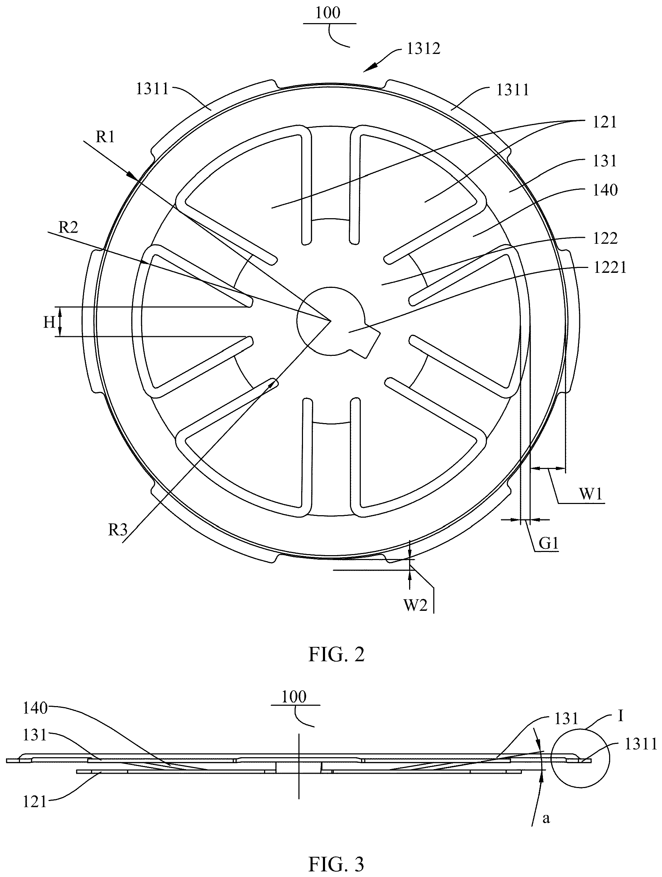

As shown in FIG. 1 and FIG. 2, the current collector 100 according to embodiments of this application includes a first connection region 120 and a second connection portion 131.

As shown in FIG. 1 and FIG. 2, the first connection region 120 includes a middle portion 122 and a plurality of first connection portions 121. The plurality of first connection portions 121 are sequentially arranged in a circumferential direction of the middle portion 122. The plurality of first connection portions 121 are separately connected to the middle portion 122. The plurality of first connection portions 121 are adapted to be electrically connected to the jelly roll 200. Herein, the plurality of first connection portions 121 are electrically connected to the jelly roll 200, to increase a connection area between the first connection region 120 and the jelly roll 200, that is, to increase a connection area between the current collector 100 and the jelly roll 200, so that an overcurrent capability of the current collector 100 is improved.

In the descriptions of this application, unless otherwise stated, "a plurality of" means two or more than two.

It should be noted that the plurality of first connection portions 121 are set to be sequentially arranged in the circumferential direction of the middle portion 122. In this way, it is ensured that the plurality of first connection portions 121 can all be connected to the middle portion 122. In this case, the middle portion 122 and the plurality of first connection portions 121 support each other, to ensure structural stability of the first connection region 120, facilitate a connection to the jelly roll 200 by using the first connection portion 121, and reduce connection difficulty. In addition, circumferential space of the middle portion 122 can be properly utilized, to increase an area of the first connection portion 121, further increase the connection area between the first connection portion 121 and the jelly roll 200, and improve the overcurrent capability of the current collector 100.

As shown in FIG. 1 and FIG. 2, the second connection portion 131 is located on one side of the first connection region 120, the second connection portion 131 is electrically connected to the middle portion 122, the first connection region 120 and the second connection portion 131 have a height difference and are movable relative to each other, and the second connection portion 131 is adapted to be electrically connected to a cover plate 300. Herein, it will be understood as that the second connection portion 131 is electrically connected to both the middle portion 122 and the cover plate 300, to implement electrical connection between the second connection portion 131 and the first connection portion 121, and facilitate implementing electrical connection between the jelly roll 200 and the cover plate 300 by using the current collector 100.

The second connection portion 131 is disposed on the one side of the first connection region 120, so that an area of the second connection portion 131 can be increased, and a connection area between the second connection portion 131 and the cover plate 300 can be further increased, to implement stable connection between the current collector 100 and the cover plate 300.

In addition, the second connection portion 131 is set to be located on the one side of the first connection region 120, so that the first connection region 120 does not occupy circumferential space of the second connection portion 131, and the second connection portion 131 does not occupy circumferential space of the first connection region 120. In this way, there is sufficient space for disposing the first connection region 120 and the second connection portion 131, to increase the areas of the first connection portion 121 and the second connection portion 131, and further increase the connection area between the first connection portion 121 and the jelly roll 200 and the connection area between the second connection portion 131 and the cover plate 300.

It should be noted that the first connection region 120 and the second connection portion 131 of this application having the height difference and are movable relative to each other. Having the height difference herein will be understood as that in a height direction of a battery cell 1000, the first connection region 120 and the second connection portion 131 are spaced apart. In other words, the first connection region 120 and the second connection portion 131 are disposed at different heights in the battery cell 1000. Being movable relative to each other herein will be understood as that the first connection region 120 is movable relative to the second connection portion 131, or the second connection portion 131 is movable relative to the first connection region 120, or the first connection region 120 and the second connection portion 131 are movable relative to each other. In this setting way, space occupied by the current collector 100 in the height direction can be reduced, so that when the jelly roll 200 and the cover plate 300 are connected by using the current collector 100, a height of reserved space between the jelly roll 200 and the cover plate 300 can be reduced. In this way, there is sufficient space for arranging the jelly roll 200. In other words, a height of the jelly roll 200 can be increased, to increase a capacity of the jelly roll 200, and further increase a capacity of the battery cell 1000. It should be noted that, as a conductive element, the current collector 100 usually uses a metal conductive material such as copper, aluminum, or iron, and naturally has characteristics such as elasticity and deformation. The first connection region 120 and the second connection portion 131 are set to have the height difference, so that a position change can occur between the first connection region 120 and the second connection portion 131 under an action of an external force. That is, when the cover plate 300 is mounted, the cover plate 300 presses the second connection portion 131 connected to the current collector 100, so that the first connection region 120 and the second connection portion 131 are movable relative to each other.

In addition, the first connection region 120 and the second connection portion 131 that have the height difference are directly used for cooperation to connect the jelly roll 200 and the cover plate 300, so that bending of the current collector 100 can be avoided in a connection process, to reduce bending processes and improve assembly efficiency. In addition, stress concentration caused by bending of the current collector 100 can be avoided, to avoid fracture of the current collector 100 and prolong a service life of the current collector 100.

The first connection region 120 and the second connection portion 131 are set to be movable relative to each other. In this way, in a process of connecting the current collector 100 and the cover plate 300, a problem that there is a soldering gap between the current collector 100 and the cover plate 300 due to a change in positions of the cover plate 300 and the jelly roll 200 can be avoided, and a problem that there is a soldering gap between the current collector 100 and the cover plate 300 due to a large difference in flatness of a plurality of soldering positions on the cover plate 300 or a large difference in flatness of second connection portions 131 can be further avoided, to reduce a possibility of poor soldering between the current collector 100 and the cover plate 300, and ensure a yield rate of the battery cell 1000.

Specifically, when flatness of a connection surface on which the cover plate 300 cooperates with the second connection portion 131 is large, the second connection portion 131 can adaptively adjust a relative position between the second connection portion 131 and the first connection portion 121 based on flatness of the cover plate 300, to further improve connection strength between the second connection portion 131 and the cover plate 300, and ensure a degree of adhesion between relative contact surfaces of the second connection portion 131 and the cover plate 300.

It will also be understood herein that, when the current collector 100 of this application is connected to the cover plate 300, the current collector 100 may absorb a manufacturing error of the cover plate 300 by using the second connection portion 131, to facilitate subsequent improvement of manufacturing precision of the battery cell 1000.

In other words, in this application, the first connection region 120 and the second connection portion 131 are set to be movable relative to each other, so that a gap between the current collector 100 and the cover plate 300 can be effectively avoided during connection of the current collector 100, to eliminate impact caused by an assembly error or the manufacturing error, further improve connection strength between the current collector 100 and the cover plate 300, and ensure a degree of adhesion between relative contact surfaces of the current collector 100 and the cover plate 300, so that the possibility of poor soldering is reduced, and the yield rate of the battery cell 1000 is subsequently ensured.

In a specific example, because the first connection region 120 and the second connection portion 131 have the height difference and are movable relative to each other, when the cover plate 300 and the jelly roll 200 are connected by using the current collector 100, the first connection region 120 may be connected to the jelly roll 200 first. Because the first connection region 120 and the second connection portion 131 have the height difference in the height direction of the battery cell 1000, after the first connection region 120 is connected to the jelly roll 200 in place, the second connection portion 131 can be disposed close to the cover plate 300 in a process of mounting the cover plate 300, to reduce difficulty in connecting the second connection portion 131 and the cover plate 300. In addition, because the first connection region 120 and the second connection portion 131 are movable relative to each other, when the second connection portion 131 is connected to the cover plate 300 in this case, it can be ensured that a position of the second connection portion 131 can be changed based on a position, a shape, a surface structure, and the like of the cover plate 300, so that the second connection portion 131 can be effectively connected to the cover plate 300, to ensure connection strength and the connection area. In this way, the connection between the cover plate 300 and the jelly roll 200 is implemented by using the current collector 100, to reduce the possibility of poor soldering between the current collector 100 and the cover plate 300, and ensure the yield rate of the battery cell 1000.

The connection between the first connection region 120 and the jelly roll 200 and the connection between the second connection portion 131 and the cover plate 300 may be soldering, bonding, or the like.

It can be learned from the foregoing structure that, in the current collector 100 in embodiments of this application, the current collector 100 is set to include the first connection region 120 and the second connection portion 131, so that the first connection region 120 and the second connection portion 131 can cooperate to implement the electrical connection between the jelly roll 200 and the cover plate 300.

The first connection region 120 is set to include the middle portion 122 and the plurality of first connection portions 121, so as to support the plurality of first connection portions 121 by using the middle portion 122, and improve position stability of the plurality of first connection portions 121. In this way, the plurality of first connection portions 121 can cooperate to facilitate implementing the electrical connection between the first connection region 120 and the jelly roll 200. In addition, when the first connection region 120 is connected to the jelly roll 200, the connection area between the first connection region 120 and the jelly roll 200 may be further increased. In other words, the connection area between the current collector 100 and the jelly roll 200 is increased, which is adapted to improve connection strength between the current collector 100 and the jelly roll 200, so that a relative position between the current collector 100 and the jelly roll 200 is stable, and position stability of the current collector 100 is improved. In addition, it can further be ensured that the current collector 100 has a large overcurrent area, to avoid insufficient overcurrents of the jelly roll 200 caused by a small overcurrent area of the current collector 100, so as to avoid a problem of serious heat generation of the jelly roll 200, prolong a service life of the jelly roll 200, and improve use safety of the jelly roll 200.

The second connection portion 131 is set to be located on the one side of the first connection region 120, to ensure the area of the second connection portion 131. In this way, when the second connection portion 131 is connected to the cover plate 300, the connection area between the second connection portion 131 and the cover plate 300 can be increased. In other words, the connection area between the current collector 100 and the cover plate 300 is increased, which is adapted to improve the connection strength between the current collector 100 and the cover plate 300, so that a relative position between the current collector 100 and the cover plate 300 is stable, and position stability of the current collector 100 is further improved.

In other words, the current collector 100 of this application can be stably connected to the jelly roll 200 and the cover plate 300.

In addition, in this application, the first connection region 120 and the second connection portion 131 are set to have a specific height difference. In this way, the current collector 100 can have a specific height, to implement the electrical connection between the jelly roll 200 and the cover plate 300 by using the current collector 100. In addition, increasing the height by bending the current collector 100 is avoided, so that bending processes are reduced, connection efficiency between the jelly roll 200 and the cover plate 300 is improved, damage to the current collector 100 can be further avoided, stress concentration caused by bending of the current collector 100 can be avoided, the service life of the current collector 100 is prolonged, and structural strength of the current collector 100 is improved.

In addition, in this application, the first connection region 120 and the second connection portion 131 are set to be movable relative each other, so that the space occupied by the current collector 100 in the height direction is reduced, and the height of the reserved space between the jelly roll 200 and the cover plate 300 is reduced. In this way, the height of the jelly roll 200 can be increased accordingly, to increase the capacity of the jelly roll 200, that is, to increase the capacity of the battery cell 1000.

In other words, in this application, a relative position between the first connection region 120 and the second connection portion 131 is creatively set, so that the electrical connection between the jelly roll 200 and the cover plate 300 can be implemented by using the current collector 100 without bending of a structure of the current collector 100, to improve connection efficiency, further avoid fracture of the current collector 100, prolong the service life of the current collector 100, and improve the structural strength of the current collector 100. In addition, manufacturing difficulty of the current collector 100 can be further reduced, the height of the current collector 100 can be further reduced, and the capacity of the jelly roll 200 can be increased.

In addition, the first connection region 120 and the second connection portion 131 are set to be movable relative to each other, so as to adjust the height difference between the first connection region 120 and the second connection portion 131, that is, to adjust the height of the current collector 100. In this way, the current collector 100 of this application is used in battery cells 1000 of different sizes, to expand an application range of the current collector 100. Because the height of the current collector 100 is adjustable, the height of the current collector 100 can be adjusted based on the position, a structure, and the like of the cover plate 300, to avoid a cooperation gap between that current collector 100 and the cover plate 300, so as to eliminate impact caused by the assembly error or the manufacturing error, improve connection strength between the current collector 100 and the cover plate 300, and ensure the degree of adhesion between the relative contact surfaces of the current collector 100 and the cover plate 300. In this way, the possibility of poor soldering is reduced, and the yield rate of the battery cell 1000 is subsequently ensured.

In conclusion, the current collector 100 of this application occupies little space and has a stable structure, high structural strength, a long service life, low manufacturing difficulty, a wide application range, and a strong overcurrent capability.

It will be understood that, compared with that in a conventional technology, the current collector 100 of this application occupies little space and is not prone to fracture, so that the electrical connection between the jelly roll 200 and the cover plate 300 is implemented, the capacity of the jelly roll 200 can be further improved, and a sufficiently large overcurrent area is further provided, to protect the jelly roll 200 and reduce the possibility of poor soldering between the current collector 100 and the cover plate 300.

Optionally, a material of the current collector 100 may be an aluminum alloy, pure copper, nickel-plated copper, or the like, so that the current collector 100 has a conductive function, to facilitate implementing the electrical connection between the jelly roll 200 and the cover plate 300 by using the current collector 100.

In some examples, the jelly roll 200 includes a tab, and the plurality of first connection portions 121 are electrically connected to the tab, to implement electrical connection between the current collector 100 and the jelly roll 200.

It should be noted that the tab herein may be a flattened full-tab structure obtained through kneading or pressing, or may be a multi-tab structure obtained through laser cleaning or die-cutting.

When the material of the current collector 100 is the aluminum alloy, the current collector 100 is mainly connected to a positive tab of the jelly roll 200 in a cooperative manner. When the material of the current collector 100 is the pure copper or the nickel-plated copper, the current collector 100 is mainly connected to a negative tab of the jelly roll 200 in a cooperative manner. In other words, a person skilled in the art may select the material of the current collector 100 based on an application environment of the current collector 100. This is not specifically limited in this application.

In some examples, the second connection portion 131 extends in a circumferential direction of the first connection region 120. In this way, the area of the second connection portion 131 can be increased to a greatest extent, and the connection area between the second connection portion 131 and the cover plate 300 can be further increased, to implement a stable connection between the current collector 100 and the cover plate 300.

In some embodiments of this application, the current collector 100 is an integrally formed member. In other words, the entire current collector 100 is manufactured through an integral molding process, to reduce manufacturing difficulty of the current collector 100, improve manufacturing efficiency, and ensure connection strength and the connection quality between the middle portion 122, the first connection portion 121, and the second connection portion 131, so that the current collector 100 has a stable structure, and the electrical connection between the jelly roll 200 and the cover plate 300 is implemented by using the current collector 100.

It should be noted that, in a process of producing the current collector 100, the current collector 100 may be cut, to form structures such as the middle portion 122, the first connection portion 121, the second connection portion 131, and the like on the current collector 100.

In some embodiments of this application, as shown in FIG. 1 and FIG. 2, the second connection portion 131 forms an annular structure, and the second connection portion 131 is located on a radially outer side of the first connection region 120 in a radial direction of the second connection portion 131. The annular structure may facilitate setting of extension of the second connection portion 131 in the circumferential direction of the first connection region 120, so as to ensure the area of the second connection portion 131. In addition, the annular structure may further increase structural strength of the second connection portion 131 and prolong a service life of the second connection portion 131.

In addition, the second connection portion 131 forms the annular structure, so that the second connection portion 131 is formed as an integrated piece, to facilitate processing of the second connection portion 131, and reduce manufacturing difficulty of the second connection portion 131.

In addition, the second connection portion 131 is set to form the annular structure, so that in a process of connecting the second connection portion 131 to the cover plate 300, an entire circumference of the second connection portion 131 can be connected to the cover plate 300 without disposition of a separate error correction mechanism, to reduce difficulty in connecting the second connection portion 131 and the cover plate 300.

In other words, in this application, the second connection portion 131 is set to be of the annular structure, so that the second connection portion 131 has a large connection area, and the structural strength of the second connection portion 131 can be improved, to prolong the service life of the second connection portion 131, reduce manufacturing difficulty of the second connection portion 131, and reduce difficulty in connecting the second connection portion 131 and the cover plate 300.

In a specific example, the second connection portion 131 is formed as an annular plate, and the annular plate is made of a conductive material such as aluminum or copper, to facilitate implementing the electrical connection between the second connection portion 131 and the cover plate 300.

In addition, the second connection portion 131 is set to be located on the radially outer side of the first connection region 120, so that the second connection portion 131 and the first connection region 120 can be spaced apart in the radial direction of the second connection portion 131, to implement a rational arrangement of the second connection portion 131 and the first connection region 120. In this way, it is ensured that the second connection portion 131 can be connected to the cover plate 300 and the first connection region 120 can be connected to the jelly roll 200, and a connection area between the second connection portion 131 and the first connection region 120 can be further ensured, to ensure the connection area between the current collector 100 and the jelly roll 200 and the connection area between the current collector 100 and the cover plate 300, and ensure connection strength.

In some examples, an inner diameter of the second connection portion 131 is greater than an outer diameter of the first connection region 120, so that the second connection portion 131 is set to be located on the radially outer side of the first connection region 120, to increase the areas of the first connection portion 121 and the second connection portion 131.

Optionally, as shown in FIG. 1, an inner wall of the second connection portion 131 is connected to the middle portion 122 by using a connecting piece 140. The inner wall of the second connection portion 131 described herein will be understood as a peripheral wall that is of the second connection portion 131 and that is close to the first connection region 120, to implement the connection between the second connection portion 131 and the middle portion 122, that is, to implement fixed connection between the second connection portion 131 and the first connection region 120. In this way, after the second connection portion 131 is connected to the cover plate 300 and the first connection region 120 is connected to the jelly roll 200, the electrical connection between the cover plate 300 and the jelly roll 200 may be implemented.

It should be noted that, the connecting piece 140 is disposed, so that the fixed connection between the second connection portion 131 and the first connection region 120 is implemented, difficulty in connecting the second connection portion 131 and the first connection region 120 can be further reduced, and connection efficiency can be improved.

In a specific example, when the current collector 100 is produced, a structure between the second connection portion 131 and the middle portion 122 is cut to form the connecting piece 140, and the connecting piece 140 may be further bent to reduce molding difficulty of the current collector 100 and improve connection strength between the connecting piece 140 and the second connection portion 131 and the middle portion 122.

In some embodiments of this application, the first connection portion 121 has a first surface connected to the jelly roll 200, the second connection portion 131 has a second surface connected to the cover plate 300, and the first surface and the second surface are parallel to each other. Herein, it will be understood as that the first connection portion 121 has the first surface, and the first connection portion 121 is adapted to be connected to the jelly roll 200 through the first surface, so as to implement the electrical connection between the first connection portion 121 and the jelly roll 200. Correspondingly, the second connection portion 131 has the second surface, and the second connection portion 131 is adapted to be connected to the cover plate 300 through the second surface, so as to implement the electrical connection between the second connection portion 131 and the cover plate 300, and implement the electrical connection between the jelly roll 200 and the cover plate 300 by using the current collector 100.

It should be noted that, in a process of assembling the battery cell 1000, a side surface that is of the jelly roll 200 and that faces the cover plate 300 is usually set in parallel with a side surface that is of the cover plate 300 and that faces the jelly roll 200. Therefore, in this application, the first surface and the second surface are set in parallel, so that it can be ensured that the second surface can be effectively connected to the cover plate 300 after connection between the first surface and the jelly roll 200 is completed, to ensure the connection area between the first connection region 120 and the jelly roll 200, and ensure the connection area between the second connection portion 131 and the cover plate 300, so as to effectively implement the electrical connection between the jelly roll 200 and the cover plate 300, and reduce connection difficulty.

In some examples, a surface that is of the first connection portion 121 and that faces the jelly roll 200 is defined as the first surface, to facilitate implementing the interconnection between the first surface and the jelly roll 200. Correspondingly, a surface that is of the second connection portion 131 and that faces the cover plate 300 is defined as the second surface, to facilitate implementing the interconnection between the second surface and the cover plate 300.

In some embodiments of this application, as shown in FIG. 1 and FIG. 3, the current collector 100 further includes a connecting piece 140, and the connecting piece 140 is connected between the second connection portion 131 and the middle portion 122. The connecting piece 140 extends obliquely relative to the first connection portion 121, so that the first connection region 120 and the second connection portion 131 have the height difference. In other words, when the connecting piece 140 extending obliquely is disposed to connect the second connection portion 131 and the middle portion 122, it can be ensured that the first connection region 120 and the second connection portion 131 can have the height difference, and molding difficulty of the current collector 100 can be reduced, to facilitate implementing the electrical connection between the jelly roll 200 and the cover plate 300 by using the current collector 100.

Optionally, the connecting piece 140 is a plate body. When the plate body extends obliquely relative to the first connection portion 121, it can be ensured that the connecting piece 140 is movable and/or deformable relative to the first connection portion 121 under an action of an external force. In this way, it is ensured that the first connection region 120 and the second connection portion 131 are movable relative to each other, to change the height of the current collector 100, and expand a use range of the current collector 100.

The movement and/or the deformation described herein will be understood as that the connecting piece 140 is constructed to be movable relative to the first connection portion 121; or the connecting piece 140 is constructed to be deformable relative to the first connection portion 121; or the connecting piece 140 is constructed to be movable relative to the first connection portion 121 and deformable relative to the first connection portion 121, so that the height difference between the first connection portion 121 and the second connection portion 131 can be changed by using the connecting piece 140, and the first connection region 120 and the second connection portion 131 are movable relative to each other, to adjust a position of the second connection portion 131 relative to the first connection portion 121, that is, to adjust a relative position between the second connection portion 131 and the cover plate 300. It should be noted that, as a conductive element, the current collector 100 usually uses the metal conductive material such as copper, aluminum, or iron, and naturally has characteristics such as elasticity and deformation. The connecting piece 140 is constructed as an obliquely extending plate body, which is more conducive to implementing movement and/or deformation, and more conducive to implementing adjustability of the position of the second connection portion 131.

In a specific example, the connecting piece 140 is formed as a rectangular plate, to facilitate implementing the fixed connection between the second connection portion 131 and the middle portion 122 by using the connecting piece 140, and ensure that the second connection portion 131 can be located on the radially outer side of the first connection region 120 after the connection is completed, and the second connection portion 131 can drive the connecting piece 140 to act under an action of an external force.

Certainly, in some other examples, the connecting piece 140 may be further formed as a square plate, a sector-shaped plate, or the like. This is not specifically limited in this application.

In a specific example, because the connecting piece 140 is movable and/or deformable relative to the first connection portion 121, when the current collector 100 is used to separately connect to the jelly roll 200 and the cover plate 300, if the cover plate 300 has the manufacturing error, a soldering position protruding toward the jelly roll 200 generates a force that drives a corresponding second connection portion 131 to move toward the jelly roll 200. Because the second connection portion 131 is connected to the first connection portion 121 by using the obliquely extending plate body, and the obliquely extending plate body is prone to a position change or deformation under an action of an external force, when the cover plate 300 drives the corresponding second connection portion 131 to move toward the jelly roll 200, the second connection portion 131 can drive the obliquely extending plate body to act, so as to ensure that the second connection portion 131 can effectively move, that is, to ensure that the second connection portion 131 can change a position based on the position of the cover plate 300, so that the second connection portion 131 can be connected to the cover plate 300, and a cooperation gap between the second connection portion 131 and the cover plate 300 is avoided. In this way, the degree of adhesion between the relative contact surfaces of the current collector 100 and the cover plate 300 is ensured, and the possibility of poor soldering is reduced.

It should be noted that, as described above, the second connection portion 131 can drive the obliquely extending plate body to act, and a specific action of the plate body may be as follows: The second connection portion 131 drives one end that is of the plate body and that is connected to the second connection portion 131 to move toward the jelly roll 200, and in a moving process of the one end of the plate body, the other end of the plate body is fixed relative to the jelly roll 200, to prompt the entire plate body to rotate toward the jelly roll 200, and implement movement of the connecting piece 140 relative to the first connection portion 121. Alternatively, the second connection portion 131 drives the one end that is of the plate body and that is connected to the second connection portion 131 to bend toward the jelly roll 200, and in a bending process, the other end of the plate body may be fixed relative to the jelly roll 200, to implement deformation of the connecting piece 140 relative to the first connection portion 121.

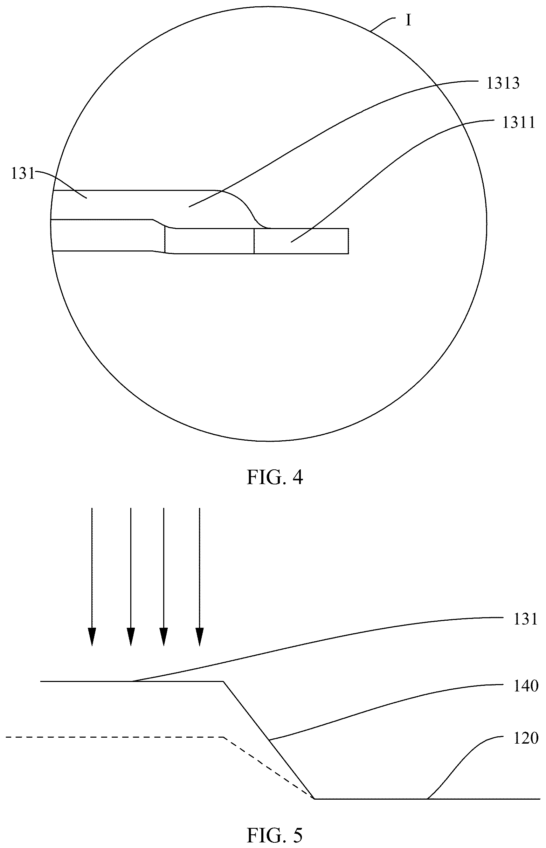

FIG. 5 is a schematic diagram of the second connection portion 131 before and after movement. Specifically, a solid line part indicates a position of the second connection portion 131 before movement, and a dashed line part indicates a position of the second connection portion 131 after movement.

Optionally, the connecting piece 140 is made of a conductive material such as aluminum or copper. The connection between the first connection region 120 and the second connection portion 131 is implemented by using the connecting piece 140, and it is ensured that the second connection portion 131 can effectively drive the obliquely extending connecting piece 140 to act under an action of an external force, that is, the connecting piece 140 is effectively movable and/or deformable relative to the first connection region 120, so as to change the height difference between the first connection region 120 and the second connection portion 131.

It should be noted that a specific length, width, and thickness of the connecting piece 140 are not limited in this application, provided that it is ensured that the connecting piece 140 can be used to effectively implement the connection between the first connection region 120 and the second connection portion 131, and the second connection portion 131 can effectively drive the obliquely extending connecting piece 140 to act under an action of an external force.

Certainly, in some other examples, the connecting piece 140 may alternatively be a buffer spring. One end of the buffer spring is connected to the second connection portion 131, and the other end of the buffer spring is connected to the first connection region 120. This also allows the connecting piece 140 to be constructed to be movable relative to the first connection region 120 and/or deformable relative to the first connection region 120, so as to change the height difference between the first connection region 120 and the second connection portion 131.

In a specific example, when the connecting piece 140 is a buffer spring, and the current collector 100 is used to separately connect to the jelly roll 200 and the cover plate 300, if there is a large difference in flatness of the plurality of soldering positions on the cover plate 300, the soldering position protruding toward the jelly roll 200 generates the force that drives the corresponding second connection portion 131 to move toward the jelly roll 200, and the second connection portion 131 compresses the buffer spring to prompt the buffer spring to deform, so as to change the height difference between the first connection region 120 and the second connection portion 131.

In some examples, as shown in FIG. 3, a value range of an inclination angle a between the connecting piece 140 and a first plane is 5°≤a<90°, and the first plane is perpendicular to a thickness direction of the current collector 100. The thickness direction of the current collector 100 herein will also be understood as the height direction of the battery cell 1000. Therefore, the first plane will also be understood as being perpendicular to the height direction of the battery cell 1000.

It should be noted that, when the inclination angle a between the connecting piece 140 and the first plane is less than 5°, an overall height of the current collector 100 is low, and consequently, the current collector 100 cannot be used to effectively implement the electrical connection between the jelly roll 200 and the cover plate 300. When the inclination angle a between the connecting piece 140 and the first plane is greater than or equal to 90°, the overall height of the current collector 100 is high, and consequently, the current collector 100 occupies a large space. As a result, the current collector 100 occupies layout space of the jelly roll 200, which leads to reduction in the capacity of the jelly roll 200. In addition, the connecting piece 140 cannot effectively drive the second connection portion 131 to move. In other words, the connecting piece 140 cannot be used to effectively change the height difference between the first connection region 120 and the second connection portion 131. As a result, the problem of poor soldering caused by the manufacturing error cannot be resolved.

Therefore, in this application, the inclination angle a between the connecting piece 140 and the first plane is set to 5°≤a<90°, so that it is ensured that the electrical connection between the jelly roll 200 and the cover plate 300 can be effectively implemented by using the current collector 100, the height difference between the first connection region 120 and the second connection portion 131 can be further effectively changed by using the connecting piece 140, and the overall height of the current collector 100 is not excessively high, to ensure the capacity of the jelly roll 200.

In a specific example, the inclination angle a between the connecting piece 140 and the first plane may be 5°, 10°, 20°, 30°, 40°, 50°, 60°, 70°, 80°, or the like.

Optionally, a height between the first connection region 120 and the second connection portion 131 ranges from 1 mm to 10 mm. A specific value of the height between the first connection region 120 and the second connection portion 131 may be adjusted based on the inclination angle a between the connecting piece 140 and the first plane. The height between the first connection region 120 and the second connection portion 131 is set to range from 1 mm to 10 mm, so that it can be ensured that the inclination angle a between the connecting piece 140 and the first plane can be in a range of 5° to 90°. In this way, it is ensured that the height difference between the first connection region 120 and the second connection portion 131 can be effectively changed by using the connecting piece 140, and the overall height of the current collector 100 is not excessively high, to ensure the capacity of the jelly roll 200.

In a specific example, the height between the first connection region 120 and the second connection portion 131 may be 1 mm, 3 mm, 5 mm, 8 mm, 10 mm, or the like.

It should be noted that the foregoing height between the first connection region 120 and the second connection portion 131 will be understood as a distance, in the height direction of the battery cell 1000, between surfaces that are of the second connection portion 131 and the first connection portion 121 and that face each other.

Optionally, as shown in FIG. 1 and FIG. 2, an orthographic projection of an outer peripheral wall of the current collector 100 on the first plane is located on a circle, and the first plane is perpendicular to the thickness direction of the current collector 100. In other words, the orthographic projection of the outer peripheral wall of the current collector 100 on the plane perpendicular to the thickness direction of the current collector 100 is located on the circle, so that the current collector 100 forms a shape similar to a circle. The circular shape allows the shape of the current collector 100 to be adapted to shapes of the jelly roll 200 and the cover plate 300, so as to reduce difficulty in connecting the current collector 100 to the jelly roll 200 and the cover plate 300, further increase the connection areas, and ensure connection quality.

In some specific examples, with reference to FIG. 1 and FIG. 2, the middle portion 122 forms a circular support plate, the plurality of first connection portions 121 are all formed as sector-shaped connection plates, and the plurality of first connection portions 121 are connected to a radially outer side of the middle portion 122 and are spaced apart in the circumferential direction of the middle portion 122. In this way, after connection between the plurality of first connection portions 121 and the middle portion 122 is completed, the first connection region 120 may form the circular shape. The second connection portion 131 forms the annular structure and is disposed on the radially outer side of the first connection region 120, so that the current collector 100 forms the shape similar to the circle.

Specifically, with reference to FIG. 1 and FIG. 2, the first connection region 120 includes the middle portion 122 and the plurality of first connection portions 121. The middle portion 122 is formed as a circular aluminum plate or a circular copper plate, and the first connection portion 121 is formed as a sector-shaped aluminum plate or a sector-shaped copper plate. The plurality of first connection portions 121 are disposed around an outer periphery of the middle portion 122 and are separately connected to the middle portion 122, and the plurality of first connection portions 121 are spaced apart. A connecting piece 140 formed as a rectangular aluminum plate or a rectangular copper plate is disposed between two adjacent first connection portions 121. In the circumferential direction of the first connection region 120, the connecting piece 140 and the first connection portion 121 are spaced apart, and a first end that is of the connecting piece 140 and that is in a radial direction of the first connection region 120 is connected to the middle portion 122.

With reference to FIG. 1 and FIG. 2, the second connection portion 131 is formed as an annular aluminum plate or an annular copper plate, the second connection portion 131 is disposed around an outer periphery of the first connection region 120, a second end that is of the connecting piece 140 and that is in the radial direction of the first connection region 120 is connected to the second connection portion 131, and the connecting piece 140 extends obliquely relative to the first connection region 120, so that the first connection region 120 and the second connection portion 131 are spaced apart in the height direction of the battery cell 1000.

In a specific example, when the current collector 100 is used to separately connect to the jelly roll 200 and the cover plate 300, the first connection region 120 is connected to the jelly roll 200 first. Because the first connection region 120 and the second connection portion 131 have the height difference in the height direction of the battery cell 1000, in the process of mounting the cover plate 300, the cover plate 300 can effectively be in contact with and cooperate with the second connection portion 131. In addition, in a process of connecting the cover plate 300 to the second connection portion 131, if there is a soldering position protruding toward the jelly roll 200 on the cover plate 300, the soldering position drives the second connection portion 131 to move toward the jelly roll 200, and the second connection portion 131 drives the second end of the connecting piece 140 to rotate around the first end toward the jelly roll 200 or drives the second end of the connecting piece 140 to bend toward the jelly roll 200, so as to use the cover plate 300 to drive the connecting piece 140 to move and/or deform relative to the first connection region 120, so that the height of the current collector 100 is changed, the current collector 100 can be effectively connected to the cover plate 300, the degree of adhesion between the relative contact surfaces of the current collector 100 and the cover plate 300 is ensured, and the possibility of poor soldering is reduced.

Optionally, as shown in FIG. 1 and FIG. 2, there are a plurality of connecting pieces 140, and the plurality of first connection portions 121 and the plurality of connecting pieces 140 are alternately spaced apart in the circumferential direction of the first connection region 120. Because the current collector 100 forms the shape similar to the circle, being in the circumferential direction of the first connection region 120 herein will also be understood as that the plurality of first connection portions 121 and the plurality of connecting pieces 140 are alternately spaced apart in the circumferential direction of the current collector 100. Being alternately spaced apart means that one connecting piece 140 is disposed between two adjacent first connection portions 121, and correspondingly, one first connection portion 121 is disposed between two adjacent connecting pieces 140. Through the foregoing disposition, space of the current collector 100 can be properly utilized, so that the plurality of first connection portions 121 and the plurality of connecting pieces 140 can be disposed on the same current collector 100 at the same time. This facilitates increasing an overcurrent area of the current collector 100 by using the plurality of first connection portions 121, and ensures that the second connection portion 131 can be connected to the middle portion 122 by using the connecting piece 140.

In some examples, as shown in FIG. 2, the plurality of first connection portions 121 are spaced apart in the circumferential direction of the current collector 100, and the connecting piece 140 is disposed between two adjacent first connection portions 121, so that the plurality of first connection portions 121 and the plurality of connecting pieces 140 can be disposed alternately in the circumferential direction of the middle portion 122, and the plurality of first connection portions 121 and the plurality of connecting pieces 140 are disposed on the current collector 100 at the same time.

Optionally, as shown in FIG. 2, the connecting piece 140 and the first connection portion 121 are spaced apart in the circumferential direction of the current collector 100, so that the first connection portion 121 does not obstruct deformation and/or movement of the connecting piece 140. In other words, it is ensured that the connecting piece 140 can effectively move and/or deform relative to the middle portion 122, to change the height difference between the first connection region 120 and the second connection portion 131, and eliminate impact of poor soldering caused by the manufacturing error.

Optionally, a value of a circumferential distance between the first connection portion 121 and an adjacent connecting piece 140 ranges from 0.5 mm to 2 mm. In this way, it is ensured that both the first connection portion 121 and the connecting piece 140 have sufficient areas, and the connecting piece 140 and the first connection portion 121 can be spaced apart, to ensure that the connecting piece 140 can effectively move and/or deform relative to the middle portion 122.

In some embodiments of this application, as shown in FIG. 2, the first connection portion 121 and an inner peripheral wall of the second connection portion 131 are spaced apart to form a spacing gap, and a value of a radial dimension G₁ of an orthographic projection of the spacing gap on the first plane ranges from 0.5 mm to 2 mm. The first plane is perpendicular to the thickness direction of the current collector 100. Herein, the first connection portion 121 and the inner peripheral wall of the second connection portion 131 are spaced apart, and the spacing gap is formed between the first connection portion 121 and the inner peripheral wall of the second connection portion 131. The radial dimension of the orthographic projection of the spacing gap on the plane perpendicular to the height direction of the battery cell 1000 is G₁, and the value of G₁ ranges from 0.5 mm to 2 mm. When G₁ is less than 0.5 mm, a distance between the first connection portion 121 and the second connection portion 131 is small, and a change in the relative position between the first connection portion 121 and the second connection portion 131 cannot happen. In other words, the first connection portion 121 and the second connection portion 131 cannot effectively have the height difference and the change in the relative position cannot happen to reduce molding difficulty and connection difficulty of the current collector 100. When G₁ is greater than 2 mm, the area of the first connection portion 121 and/or the area of the second connection portion 131 are/is reduced. In other words, the connection area between the first connection portion 121 and the jelly roll 200 is reduced, and/or the connection area between the second connection portion 131 and the cover plate 300 is reduced. As a result, the overcurrent capability of the current collector 100 is poor, and position stability after connection of the current collector 100 cannot be ensured.

Therefore, in this application, the radial dimension G₁ of the orthographic projection, of the spacing gap that the first connection portion 121 and the inner peripheral wall of the second connection portion 131 are spaced apart to form, on the plane perpendicular to the height direction of the battery cell 1000 is set to range from 0.5 mm and 2 mm, so that it is ensured that the first connection portion 121 and the second connection portion 131 can effectively have the height difference, and the areas of the first connection portion 121 and the second connection portion 131 can be further ensured.

In some specific examples, the radial dimension G₁ of the orthographic projection, of the spacing gap that the first connection portion 121 and the inner peripheral wall of the second connection portion 131 are spaced apart to form, on the plane perpendicular to the height direction of the battery cell 1000 may be 0.5 mm, 1 mm, 1.5 mm, or 2 mm.

In some examples, as shown in FIG. 2, a spacing between opposing sidewalls of each first connection portion 121 gradually increases in a direction away from the middle portion 122. In this way, the area of the first connection portion 121 is increased, to ensure that the first connection portion 121 has a sufficient connection area with the tab of the jelly roll 200, so as to ensure that the current collector 100 has a large overcurrent area, and avoid insufficient overcurrents of the jelly roll 200 caused by a small overcurrent area of the current collector 100. This further avoids the problem of serious heat generation of the jelly roll 200, to prolong the service life of the jelly roll 200 and improve use safety of the jelly roll 200.

In some examples, the first connection portion 121 may form a sector shape in FIG. 2. The sector shape allows the spacing between the opposite sidewalls of the first connection portion 121 to gradually increase in the direction away from the middle portion 122, so as to increase the area of the first connection portion 121.

Certainly, in some other examples, the first connection portion 121 may alternatively form a triangle, a rectangle, a circle, or the like. This is not specifically limited in this application.

In some embodiments of this application, as shown in FIG. 2, the orthographic projection of the outer peripheral wall of the current collector 100 on the first plane is located on the circle, the first plane is perpendicular to the thickness direction of the current collector 100, a minimum value of a radius of the outer peripheral wall of the current collector 100 is R₁, and a value of R₁ ranges from 10 mm to 100 mm. Herein, it will be understood that, when the current collector 100 forms the shape similar to the circle, the minimum value of the radius of the outer peripheral wall of the current collector 100 is R₁. The minimum value of the radius will be understood as that there are a plurality of different values for the radius of the outer peripheral wall of the current collector 100, where the minimum value ranges from 10 mm and 100 mm, to ensure that a size of the current collector 100 can be adapted to those of the jelly roll 200 and the cover plate 300, so as to facilitate implementing the electrical connection between the jelly roll 200 and the cover plate 300 by using the current collector 100, and ensure that the current collector 100 has sufficient connection areas with the jelly roll 200 and the cover plate 300.

Certainly, in some other examples, the radius of the current collector 100 is not limited to 10 mm to 100 mm, and a person skilled in the art may define the radius of the current collector 100 based on actual areas of the jelly roll 200 and the cover plate 300, to ensure that the current collector 100 has sufficient connection areas with the jelly roll 200 and the cover plate 300.

In a specific example, with reference to FIG. 1 and FIG. 2, a stop protrusion 1313 and a reinforcement portion 1311 are provided on the radially outer peripheral wall of the current collector 100. The minimum value of the radius of the outer peripheral wall of the current collector 100 described above will be understood as a radius of the current collector 100 in a case in which the stop protrusion 1313 is provided on the current collector 100.

Optionally, as shown in FIG. 2, a maximum value of a radius of an outer peripheral wall of the first connection region 120 is greater than or equal to half of the minimum value of the radius of the outer peripheral wall of the current collector 100 and less than the minimum value of the radius of the outer peripheral wall of the current collector 100, that is, the maximum value R₂ of the radius of the outer peripheral wall of the first connection region 120 and R₁ meet the following condition: ½R₁≤R₂<R₁. Herein, there are a plurality of different values for the radius of the outer peripheral wall of the first connection region 120, where the maximum value of the radius of the outer peripheral wall of the first connection region 120 is R₂, and R₂ and R₁ further need to satisfy a specific relationship.

It should be noted that, R₂ is set to be less than R₁, to facilitate reservation of specific layout space for the second connection portion 131, so that it is ensured that the second connection portion 131 has a specific area, to increase the connection area between the second connection portion 131 and the cover plate 300. R₂ is set to be greater than or equal to ½R₁, so that it can be ensured that the first connection region 120 has a specific area, to increase the connection area between the first connection region 120 and the jelly roll 200.

In other words, in this application, the relationship between R₂ and R₁ is set, to ensure that both the first connection portion 121 and the second connection portion 131 have specific connection areas, so that fixed connection between the current collector 100 and the jelly roll 200 and fixed connection between the current collector 100 and the cover plate 300 are implemented, and it can be ensured that the current collector 100 has a large overcurrent area.

Optionally, as shown in FIG. 2, a radius of the middle portion 122 is R₃, where the radius of the middle portion 122 is greater than 5 mm and less than half of the maximum value of the radius of the outer peripheral wall of the first connection region 120, that is, 5 mm<R₃<½R₂. It should be noted that the radius of the middle portion 122 herein will also be understood as a radial dimension of the middle portion 122 in a case in which the middle portion 122 is formed as the circular support plate. Because the radius of the first connection region 120 is a fixed value, a relationship between the radius R₃ of the middle portion 122 and R₂ is set, to ensure that both the first connection portion 121 and the middle portion 122 have specific connection areas, so as to implement the fixed connection between the current collector 100 and the jelly roll 200, and ensure that the current collector 100 has a large overcurrent area.

Optionally, as shown in FIG. 2, a radial width of the second connection portion 131 is W₁. The radial width of the second connection portion 131 is greater than or equal to 1 mm and less than or equal to half of the minimum value of the radius of the outer peripheral wall of the current collector 100, that is, 1 mm≤W₁≤½R₁. The radial width of the second connection portion 131 described herein will be understood as a width of extension of the second connection portion 131 in a radial direction of the current collector 100 in a case in which the current collector 100 forms the shape similar to the circle. In some examples, the second connection portion 131 is disposed on the radially outer side of the first connection portion 121, and the radius of the current collector 100 is fixed. Therefore, through the foregoing disposition, it is ensured that the connection area of the second connection portion 131 can meet a minimum connection requirement and the first connection portion 121 has a sufficient connection area, so as to facilitate implementing the electrical connection between the jelly roll 200 and the cover plate 300 by using the current collector 100.

In some embodiments of this application, as shown in FIG. 1, FIG. 3, and FIG. 4, the orthographic projection of the outer peripheral wall of the current collector 100 on the first plane is located on the circle, and the first plane is perpendicular to the thickness direction of the current collector 100. The second connection portion 131 is provided with the stop protrusion 1313. The stop protrusion 1313 extends toward the first connection portion 121. The stop protrusion 1313 is located on the radially outer side of the first connection portion 121. The stop protrusion 1313 is adapted to be located on a radially outer side of the tab of the jelly roll 200. The radially outer side of the first connection portion 121 described herein will be understood as a side that is of the first connection portion 121 and that is close to a radially outer side of the current collector 100 in a case in which the current collector 100 forms the shape similar to the circle. The stop protrusion 1313 may play a role of reinforcing the second connection portion 131, that is, improving the structural strength of the second connection portion 131, to avoid deformation when the second connection portion 131 is connected to the cover plate 300, so as to ensure that the second connection portion 131 can be stably connected to the cover plate 300. In addition, the stop protrusion 1313 facilitates defining a position of the tab on the jelly roll 200, so that the tab can be stably disposed on the jelly roll 200, to prevent a failure of the jelly roll 200 due to loosening of the tab and pulling of a soldering seam under an actual working condition.

Optionally, as shown in FIG. 1, the stop protrusion 1313 extends in a circumferential direction of the second connection portion 131, which will also be understood as that the stop protrusion 1313 extends in the circumferential direction of the current collector 100 that forms the circular shape, to increase an area of the stop protrusion 1313, and ensure that the stop protrusion 1313 can effectively improve the structural strength of the second connection portion 131. In addition, it can be further ensured that the stop protrusion 1313 can effectively define the position of the tab, to further ensure that the tab can be stably disposed on the jelly roll 200.

In addition, the stop protrusion 1313 extending in the circumferential direction of the second connection portion 131 may further protect the tab, so as to prolong a service life of the tab, that is, to prolong the service life of the jelly roll 200.

Certainly, in some other examples, there are a plurality of stop protrusions 1313, and the plurality of stop protrusions 1313 are spaced apart in the circumferential direction of the second connection portion 131. In this way, the stop protrusion 1313 can also be used to improve the structural strength of the second connection portion 131 and define the position of the tab.

Optionally, a length of extension of the stop protrusion 1313 toward the first connection portion 121 is greater than or equal to an exposure height of the tab, to ensure that the stop protrusion 1313 can effectively protect the tab and define the position of the tab.

In a specific example, the exposure height of the tab ranges from 0.5 mm to 2 mm. In other words, the length of extension of the stop protrusion 1313 toward the first connection portion 121 is greater than 0.5 mm.

Optionally, the stop protrusion 1313 is defined through bending and deformation of a part of the second connection portion 131. In other words, in a process of manufacturing the second connection portion 131, a part of a structure of the second connection portion 131 is bent and deformed to form the stop protrusion 1313. In this way, there is no need to separately connect a structural member to the second connection portion 131 to form the stop protrusion 1313, so as to reduce manufacturing difficulty of the stop protrusion 1313, that is, to reduce manufacturing difficulty of the second connection portion 131. In addition, position stability of the stop protrusion 1313 can be further improved.

Optionally, as shown in FIG. 1 and FIG. 2, the reinforcement portion 1311 is provided on an outer periphery of the stop protrusion 1313. The reinforcement portion 1311 is configured to improve structural strength of the stop protrusion 1313 and the second connection portion 131, and avoid deformation when the second connection portion 131 is connected to the cover plate 300, and can further ensure that the stop protrusion 1313 can effectively protect the tab and define the position of the tab.

Optionally, as shown in FIG. 1 and FIG. 2, there are a plurality of reinforcement portions 1311, and the plurality of reinforcement portions 1311 are spaced apart. The plurality of reinforcement portions 1311 cooperate to improve the structural strength of the stop protrusion 1313 and the second connection portion 131 to a greatest extent.

Optionally, as shown in FIG. 1 and FIG. 2, the avoidance port 1312 for fluid flow is formed between two adjacent reinforcement portions 1311. In other words, it only requires spacing two adjacent reinforcement portions 1311 apart, so that two adjacent reinforcement portions 1311 cooperate to form the avoidance port 1312 on an outer peripheral wall of the second connection portion 131, without a need to separately process the second connection portion 131 to form the avoidance port 1312. This reduces manufacturing difficulty of the avoidance port 1312, that is, reduces manufacturing difficulty of the second connection portion 131, and can further improve manufacturing efficiency of the second connection portion 131. The avoidance port 1312 is configured to implement communication between two opposite ends of the second connection portion 131, so as to ensure that gas in the jelly roll 200 can flow smoothly.

In other words, the avoidance port 1312 of this application is adapted to form an exhaust passage.

In some examples, as shown in FIG. 2, a plurality of avoidance ports 1312 are provided on the outer peripheral wall of the second connection portion 131, and the plurality of avoidance ports 1312 are evenly spaced apart, so that the plurality of avoidance ports 1312 can cooperate to ensure that gas distribution in the jelly roll 200 can be more even.

It should be noted that FIG. 2 shows that the avoidance port 1312 forms a shape similar to a rectangle. In some other examples, the avoidance port 1312 may alternatively form a circle, a triangle, or the like. This is not specifically limited in this application.

It should be further noted that a specific quantity of the plurality of avoidance ports 1312 is not limited in this application, and a person skilled in the art may set the quantity based on a gas production amount in the jelly roll 200.

Optionally, a radial width of the avoidance port 1312 is W₂, where 0.5 mm≤W₂≤5 mm. It should be noted that the radial width of the avoidance port 1312 described herein will be understood as a width of extension of the avoidance port 1312 in the radial direction of the current collector 100 in a case in which the current collector 100 forms the shape similar to the circle. When W₂<0.5 mm, a gas exhausting capability of the avoidance port 1312 is reduced. When W₂>5 mm, manufacturing difficulty of the avoidance port 1312 is increased, and the connection area between the second connection portion 131 and the cover plate 300 is affected.

Therefore, in this application, the radial width W₂ of the avoidance port 1312 is set to be greater than or equal to 0.5 mm and less than or equal to 5 mm, so that it is ensured that gas in the jelly roll 200 can be smoothly exhausted from the avoidance port 1312, and it can be further ensured that the avoidance port 1312 can be better formed. In addition, the area of the second connection portion 131 is ensured, that is, the connection area between the second connection portion 131 and the cover plate 300 is ensured.

In some embodiments of this application, as shown in FIG. 1 and FIG. 2, the middle portion 122 is provided with a liquid injection port 1221 that extends through the middle portion 122 in a thickness direction of the middle portion 122. Herein, the middle portion 122 is provided with the liquid injection port 1221, and the liquid injection port 1221 extends through the middle portion 122 in the thickness direction of the middle portion 122, to implement communication between two sides of the middle portion 122 in the thickness direction, so as to facilitate liquid injection into the jelly roll 200 through the liquid injection port 1221.

In other words, when the current collector 100 of this application is electrically connected to the jelly roll 200, it can also be ensured that liquid can be normally injected into the jelly roll 200.

Optionally, as shown in FIG. 1, the liquid injection port 1221 includes a penetration port 1222 and a positioning port 1223 that communicate with each other. The penetration port 1222 facilitates liquid injection into the jelly roll 200. The positioning port 1223 is adapted to cooperate with a tooling device to avoid rotation of the current collector 100 in a mounting process. Through the foregoing arrangement, it can be ensured that the liquid injection port 1221 facilitates liquid injection into the jelly roll 200, and also facilitates positioning of the current collector 100, to reduce difficulty in connecting the current collector 100 and the jelly roll 200 and improve connection efficiency. In addition, accuracy of the connection between the current collector 100 and the jelly roll 200 can be further ensured.

In addition, the positioning port 1223 can further prevent the current collector 100 from rotating relative to the jelly roll 200, to improve position stability of the current collector 100.

In a specific example, the penetration port 1222 is formed as a circular port, to facilitate liquid injection into the jelly roll 200 through the penetration port 1222 and ensure a liquid injection amount. The positioning port 1223 is formed as a rectangular port, so that the positioning port 1223 is used to cooperate with the tooling device to avoid rotation of the current collector 100 in the mounting process, and reduce mounting difficulty of the current collector 100.

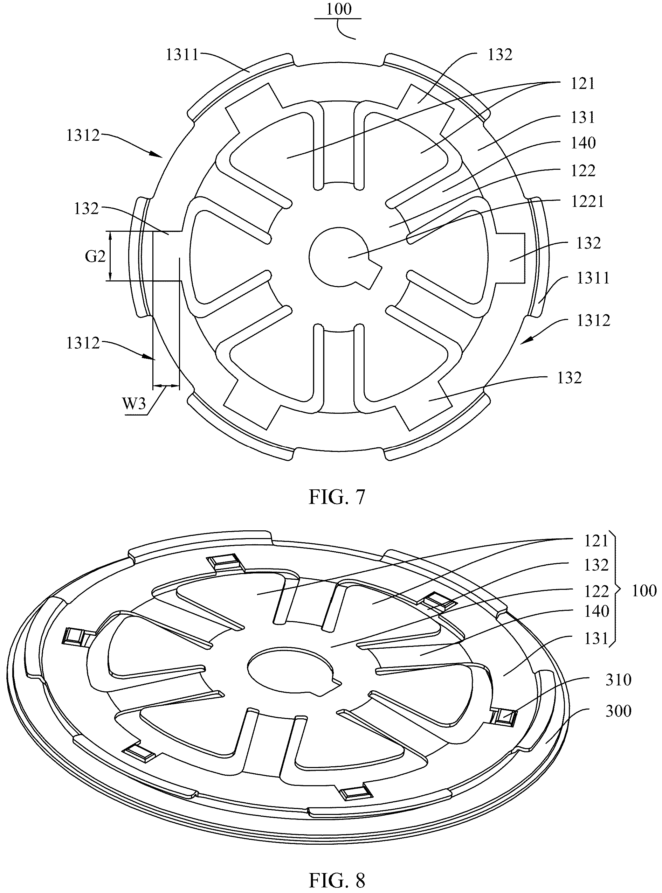

In some embodiments of this application, with reference to FIG. 7 and FIG. 8, a first limiting portion 132 is provided on the second connection portion 131, and the first limiting portion 132 is adapted to be in limiting fit with a second limiting portion 310 on the cover plate 300. In other words, the second limiting portion 310 is provided on the cover plate 300, and the first limiting portion 132 is provided on the second connection portion 131. After the second limiting portion 310 and the first limiting portion 132 are in limiting fit, limiting fit between the second connection portion 131 and the cover plate 300 can be implemented, to avoid a change in the relative position between the second connection portion 131 and the cover plate 300 in a connecting process, so as to reduce difficulty in connecting the second connection portion 131 and the cover plate 300, and improve connection efficiency.

Optionally, the second connection portion 131 forms an annular shape, and the first limiting portion 132 is a limiting port extending to the inner peripheral wall of the second connection portion 131. Herein, the first limiting portion 132 is a limiting port, and the limiting port extends in the radial direction of the second connection portion 131 and extends to the inner peripheral wall of the second connection portion 131, to facilitate implementing the limiting fit between the second connection portion 131 and the cover plate 300 by using the limiting port.

Optionally, the second limiting portion 310 is a limiting protrusion, and the limiting protrusion is provided on the cover plate 300 and extends toward the current collector 100, to ensure that the limiting protrusion can perform limiting fit in the limiting port, so as to implement the limiting fit between the second connection portion 131 and the cover plate 300 through cooperation between the first limiting portion 132 and the second limiting portion 310.

Optionally, the radial width of the second connection portion 131 is W₁, and a radial width W₃ of the first limiting portion 132 is greater than or equal to 0.5 mm and less than the radial width of the second connection portion 131, that is, 0.5 mm≤W₃<W₁. In other words, the first limiting portion 132 has a specific width in the radial direction of the current collector 100 that forms the circular shape, to facilitate formation of a limiting notch, and facilitate implementing positioning cooperation between the second connection portion 131 and the cover plate 300 by using the first limiting portion 132. In addition, a radial width of the first limiting portion 132 is set to be less than the radial width of the second connection portion 131, so that reduction in the structural strength and the connection area of the second connection portion 131 due to providing of the first limiting portion 132 can be avoided, to ensure that the second connection portion 131 has specific structural strength, prolong the service life, and ensure that the second connection portion 131 has a specific connection area with the cover plate 300.

Optionally, as shown in FIG. 7, a circumferential length of the first limiting portion 132 is G₂, where 0.5 mm≤G₂≤πR₁/n₁, n₁ indicates a quantity of first limiting portions 132, π indicates a ratio of a circumference of a circle to its diameter, and π≈3.14. In this way, it is ensured that the first limiting portion 132 has a specific extension length to cooperate with the limiting protrusion, and excessive reduction in the area of the second connection portion 131 due to providing of the first limiting portion 132 can be further avoided. In other words, the second connection portion 131 has a specific connection area with the cover plate 300, to facilitate implementing the fixed connection between the current collector 100 and the cover plate 300.

Optionally, as shown in FIG. 7, there are a plurality of first limiting portions 132, and the plurality of first limiting portions 132 are provided in one-to-one alignment with the plurality of first connection portions 121 in the radial direction of the second connection portion 131. The plurality of first limiting portions 132 are provided, to ensure that positioning cooperation between the second connection portion 131 and the cover plate 300 can be effectively performed. The plurality of first limiting portions 132 are provided in one-to-one alignment with the plurality of first connection portions 121, so that the first limiting portion 132 can be provided away from the connecting piece 140, to prevent the first limiting portion 132 from affecting the fixed connection between the second connection portion 131 and the middle portion 122. In other words, it is ensured that the first limiting portion 132 can be used to effectively implement positioning cooperation between the second connection portion 131 and the cover plate 300, and it can be further ensured that the fixed connection between the second connection portion 131 and the middle portion 122 can be effectively performed, so as to ensure position stability and the structural strength of the current collector 100.

It should be noted that the figure shows a case in which an orthographic projection of the first limiting portion 132 on the first plane forms a rectangle. In some other examples, the orthographic projection of the first limiting portion 132 on the first plane forms a square, a triangle, a sector shape, or the like.

The following describes a battery cell 1000 in embodiments of this application with reference to the accompanying drawings of this specification.

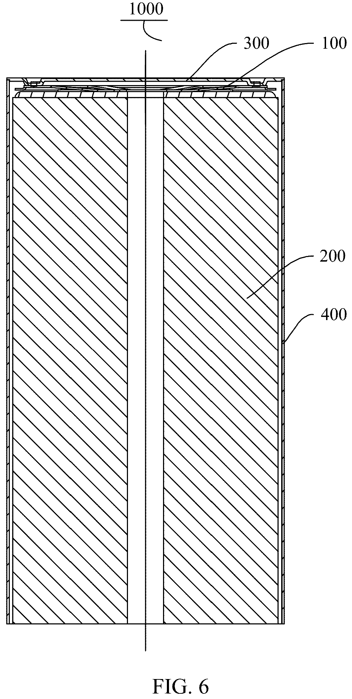

As shown in FIG. 6, the battery cell 1000 according to embodiments of this application includes a casing 400, a jelly roll 200, a cover plate 300, and a current collector 100.

An accommodation cavity with an opening is formed in the casing 400. The opening is adapted to implement communication between the interior and the exterior of the accommodation cavity, to ensure that external components (for example, the current collector 100 and the jelly roll 200) can be disposed in the accommodation cavity.

The jelly roll 200 is disposed in the accommodation cavity, and the cover plate 300 is disposed at the opening. In other words, the jelly roll 200 is adapted to be disposed in the casing 400, to protect the jelly roll 200 by using the casing 400, so as to prolong a service life of the jelly roll 200 and improve use safety of the jelly roll 200. In addition, the cover plate 300 is disposed at the opening, so that the opening can be sealed by using the cover plate 300, to prevent an external foreign object, dust, and the like from entering the accommodation cavity through the opening, and further improve use safety of the jelly roll 200.

The current collector 100 is the foregoing current collector 100. The current collector 100 is disposed between the jelly roll 200 and the cover plate 300. The first connection portion 121 is electrically connected to the jelly roll 200, and the second connection portion 131 is electrically connected to the cover plate 300. The cover plate 300 is adapted to drive the second connection portion 131 to move relative to the first connection region 120.

It can be learned from the foregoing structure that the battery cell 1000 in embodiments of this application uses the foregoing current collector 100, so that space occupied by the current collector 100 in the casing 400 can be reduced, which is conducive to increasing a capacity of the jelly roll 200, so as to improve a capacity of the battery cell 1000, further avoid poor soldering, and ensure quality of the battery cell 1000.

In addition, the first connection portion 121 is set to be electrically connected to the jelly roll 200, so that it can be ensured that the current collector 100 has a sufficient connection area with the jelly roll 200, to implement fixed connection between the current collector 100 and the jelly roll 200, increase an overcurrent area of the current collector 100, and avoid insufficient overcurrents of the jelly roll 200 caused by a small overcurrent area of the current collector 100, so as to avoid a problem of serious heat generation of the jelly roll 200. In this way, the service life of the jelly roll 200 is prolonged, and use safety of the jelly roll 200 is improved, to prolong a service life of the battery cell 1000 and improve use safety of the battery cell 1000.

The second connection portion 131 is set to be connected to the cover plate 300, so as to implement electrical connection between the current collector 100 and the cover plate 300. The cover plate 300 may be used to drive the second connection portion 131 to move relative to the first connection region 120, so as to implement electrical connection between the jelly roll 200 and the cover plate 300, so that the battery cell 1000 can work normally.

In addition, structural stability of the battery cell 1000 can be further improved by using the foregoing current collector 100.

In other words, the battery cell 1000 of this application uses the foregoing current collector 100, so that the battery cell 1000 has advantages of a large capacity, a stable structure, a long service life, high use safety, and the like.

Optionally, the battery cell 1000 is a cylindrical battery, so that structures (the jelly roll 200 and the cover plate 300) in the battery cell 1000 can be adapted to a circular current collector.

In some examples, an area of an orthographic projection of the first connection portion 121 on a first plane is S₁, and a minimum connection area between the first connection portion 121 and the jelly roll 200 is S, where S=γS₁, and 0.2≤γ≤1. In other words, the minimum connection area between the first connection portion 121 and the jelly roll 200 may be less than the area of the orthographic projection of the first connection portion 121 on the first plane, but it is still necessary to ensure that the first connection portion 121 has a sufficient connection area with the jelly roll 200, so as to ensure an overcurrent capability of the current collector 100.

In addition, the minimum connection area between the first connection portion 121 and the jelly roll 200 may be set to be less than the area of the orthographic projection of the first connection portion 121 on the first plane, so that difficulty in connecting the current collector 100 and the jelly roll 200 can be reduced, and assembly efficiency of the battery cell 1000 can be improved. A connection area between the first connection portion 121 and the jelly roll 200 may be measured based on a connection trace, for example, based on a soldering mark. A distinguishing boundary between the first connection portion 121 and the middle portion 122 may be a straight line connecting opposite sidewalls of connection positions of the first connection portion 121 and the middle portion 122.

It should be noted that, in some examples, to ensure that a worker can effectively determine whether the minimum connection area between the first connection portion 121 and the jelly roll 200 meets a requirement, a minimum connection region may be provided on the first connection portion 121. When all minimum connection regions are connected to the jelly roll 200, it is determined that the minimum connection area between the first connection portion 121 and the jelly roll 200 meets the requirement.

Optionally, a plurality of positioning portions are provided on the first connection portion 121, for example, positioning grooves or positioning protrusions, and a region enclosed by the plurality of positioning portions forms a minimum connection region.

In some examples, the minimum connection area S between the first connection portion 121 and the jelly roll 200 may be determined based on a minimum overcurrent requirement C of the jelly roll 200, where a product of a quantity of first connection portions 121, a compensation coefficient, an overcurrent coefficient of the first connection portion 121, and the minimum connection area between the first connection portion 121 and the jelly roll 200 is greater than or equal to the minimum overcurrent requirement of the jelly roll 200. In other words, the minimum connection area S between the first connection portion 121 and the jelly roll 200 and the minimum overcurrent requirement C of the jelly roll 200 need to meet the following condition: nNKS≥C, where n indicates the quantity of first connection portions 121; N is the compensation coefficient, and N ranges from 0.7 to 1; and K is the overcurrent coefficient of the first connection portion 121.

It should be noted that K may be directly determined based on a material of the first connection portion 121 and is in a unit of Ah/mm². The minimum overcurrent requirement C of the jelly roll 200 may be determined based on charging time required by the jelly roll 200, and a specific determining manner is as follows: In an actual production process of the battery cell 1000, fast charging time that a battery cell 1000 to be produced needs to meet may be directly determined. In other words, charging time of the battery cell 1000 may be clearly learned. The charging time of the jelly roll 200 is determined based on the charging time of the battery cell 1000, and then the minimum overcurrent requirement C of the jelly roll 200 is obtained based on the charging time of the jelly roll 200. Finally, the minimum connection area S between the first connection portion 121 and the jelly roll 200 is calculated based on the minimum overcurrent requirement C, so that the minimum connection area S between the first connection portion 121 and the jelly roll 200 and the minimum overcurrent requirement C of the jelly roll 200 can meet the specific condition. In this way, it is ensured that the overcurrent capability of the current collector 100 can meet the minimum overcurrent requirement of the jelly roll 200, to avoid insufficient overcurrents of the jelly roll 200 and avoid the problem of serious heat generation of the jelly roll 200, so as to prolong the service life of the jelly roll 200 and improve use safety of the jelly roll 200.

In some specific examples, the minimum overcurrent requirement C of the jelly roll 200 ranges from 15 Ah to 120 Ah.

Optionally, a connection width H between the first connection portion 121 and the middle portion 122 and the minimum overcurrent requirement C of the jelly roll 200 also need to meet a specific condition, to further ensure the overcurrent capability of the current collector 100.

The connection width H described herein will be understood as a straight line distance between opposite sidewalls at a connection position between the first connection portion 121 and the middle portion 122. In other words, there are the two opposite sidewalls at the connection position between the first connection portion 121 and the middle portion 122, and the straight line distance between the two sidewalls forms the connection width H between the first connection portion 121 and the middle portion 122 (for details about the connection width H, refer to FIG. 2).

Specifically, a product of the quantity of first connection portions 121, an overcurrent coefficient of the current collector 100, the connection width between the first connection portion 121 and the middle portion 122, and a thickness of the first connection portion 121 is greater than or equal to the minimum overcurrent requirement of the jelly roll 200. In other words, the connection width H between the first connection portion 121 and the middle portion 122 and the minimum overcurrent requirement C of the jelly roll 200 meet the following condition: nKHδ≥C, where n indicates the quantity of first connection portions 121; δ indicates the thickness of the first connection portion 121; and K is the overcurrent coefficient of the current collector 100, and K may be directly determined based on the material of the current collector 100 and is in the unit of Ah/mm².

In other words, in an actual production process of the battery cell 1000, it is ensured that the minimum connection area S between the first connection portion 121 and the jelly roll 200 and the minimum overcurrent requirement C of the jelly roll 200 meet the specific condition, and the connection width H between the first connection portion 121 and the middle portion 122 and the minimum overcurrent requirement C of the jelly roll 200 also need to meet the specific condition, to effectively ensure the overcurrent capability of the current collector 100.

A specific method for determining the connection width H between the first connection portion 121 and the middle portion 122 is as follows: In the actual production process of the battery cell 1000, the charging time of the battery cell 1000 may be directly determined. After the charging time of the battery cell 1000 is determined, the charging time of the jelly roll 200 is first determined based on the charging time of the battery cell 1000, and the minimum overcurrent requirement C of the jelly roll 200 is obtained based on the charging time of the jelly roll 200. Finally, the connection width H between the first connection portion 121 and the middle portion 122 is calculated based on the minimum overcurrent requirement C, the quantity of first connection portions 121, and the thickness of the first connection portion 121, so that the connection width H between the first connection portion 121 and the middle portion 122 and the minimum overcurrent requirement C of the jelly roll 200 meet the specific condition.

In some embodiments of this application, as shown in FIG. 1, FIG. 3, and FIG. 4, the orthographic projection of the outer peripheral wall of the current collector 100 on the first plane is located on the circle, and the first plane is perpendicular to the thickness direction of the current collector 100. The second connection portion 131 is provided with the stop protrusion 1313 extending toward the first connection portion 121. The stop protrusion 1313 is located on the radially outer side of the first connection portion 121, and the stop protrusion 1313 is located on the radially outer side of the tab of the jelly roll. The radially outer side of the first connection portion 121 described herein will be understood as the side that is of the first connection portion 121 and that is close to the radially outer side of the current collector 100 in a case in which the current collector 100 forms the shape similar to the circle. When the stop protrusion 1313 is set to be located on the radially outer side of the first connection portion 121, after the current collector 100 is connected to the jelly roll 200, the stop protrusion 1313 can be located on the radially outer side of the tab of the jelly roll, which facilitates defining the position of the tab by using the stop protrusion 1313, so that the tab can be stably disposed on the jelly roll 200, to prevent a failure of the jelly roll 200 due to loosening of the tab and pulling of the soldering seam under the actual working condition.

In other words, the current collector 100 of this application can be used to implement the electrical connection between the jelly roll 200 and the cover plate 300, and can be further used to fasten the tab, so as to ensure working performance of the battery cell 1000.

The following describes a battery pack 2000 according to embodiments of this application.

The battery pack 2000 according to embodiments of this application includes a plurality of battery cells 1000, where each battery cell 1000 is the foregoing battery cell 1000.

It can be understood from the foregoing structure that the battery pack 2000 according to embodiments of this application uses the foregoing battery cell 1000, so that a capacity of the battery cell 1000 can be increased, structural stability of the battery pack 2000 can be improved, a service life of the battery pack 2000 can be prolonged, and use safety of the battery pack 2000 can be improved.

The following describes a power consuming apparatus 3000 according to embodiments of this application.

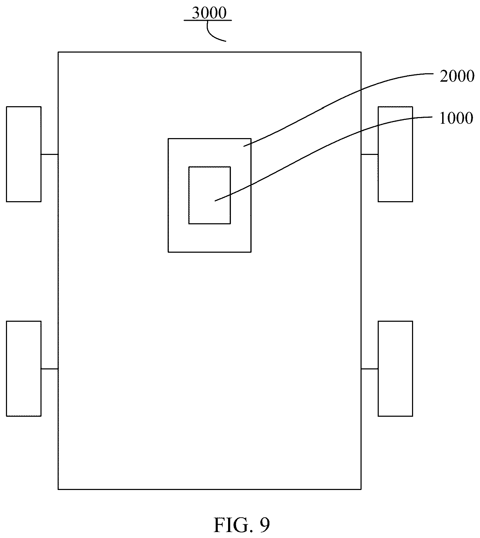

As shown in FIG. 9, the power consuming apparatus 3000 according to embodiments of this application includes a battery pack 2000, where the battery pack 2000 is the foregoing battery pack 2000.

It can be understood from the foregoing structure that the power consuming apparatus 3000 according to embodiments of this application uses the foregoing battery pack 2000, that is, uses the foregoing battery cell 1000, to improve use safety of the power consuming apparatus 3000, further prolong a service life of the power consuming apparatus 3000, and reduce use costs.

It should be noted that the power consuming apparatus 3000 herein may be a vehicle, an energy storage cabinet, a ship, an aircraft, or the like.

FIG. 1 and FIG. 2 both show six first connection portions 121 for the purpose of illustrative description. However, after reading the above technical solution, a person of ordinary skill will clearly understand that extending this solution to a technical solution with another quantity of first connection portions 121 also falls within the scope of this application.

Other components of the current collector 100, the battery cell 1000, the battery pack 2000, and the power consuming apparatus 3000 according to embodiments of this application are known to a person of ordinary skill in the art, and are not described in detail herein again.

Although embodiments of this application have been shown and described, a person of ordinary skill in the art can understand that various changes, modifications, substitutions and variations may be made to these embodiments without departing from the principle and the purpose of this application, and the scope of this application is defined by the claims and their equivalents.

## Claims

1. A current collector, comprising:
a first connection region, wherein the first connection region comprises a middle portion and a plurality of first connection portions, the plurality of first connection portions are sequentially arranged in a circumferential direction of the middle portion, the plurality of first connection portions are separately connected to the middle portion, and the plurality of first connection portion are adapted to be electrically connected to a jelly roll; and
a second connection portion, wherein the second connection portion is located on one side of the first connection region, the second connection portion is electrically connected to the middle portion, the first connection region and the second connection portion having a height difference and being movable relative to each other, and the second connection portion being adapted to be electrically connected to a cover plate.

2. The current collector according to claim 1, wherein the current collector is an integrally formed member.

3. The current collector according to claim 1 or 2, wherein the second connection portion forms an annular structure, the second connection portion is located on a radially outer side of the first connection region in a radial direction of the second connection portion, and an inner wall of the second connection portion is connected to the middle portion by using a connecting piece.

4. The current collector according to any one of claims 1 to 3, wherein the first connection portion has a first surface connected to the jelly roll, the second connection portion has a second surface connected to the cover plate, and the first surface and the second surface are parallel to each other.

5. The current collector according to any one of claims 1 to 4, further comprising a connecting piece wherein the connecting piece is connected between the second connection portion and the middle portion, the connecting piece extends obliquely toward the second connection portion relative to the middle portion, so that the first connection region and the second connection portion having the height difference.

6. The current collector according to claim 5, wherein a value range of an inclination angle a between the connecting piece and a first plane is 5°≤a<90°, and the first plane is perpendicular to a thickness direction of the current collector.

7. The current collector according to claim 5 or 6, wherein an orthographic projection of an outer peripheral wall of the current collector on the first plane is located on a circle, the first plane is perpendicular to the thickness direction of the current collector, there are a plurality of connecting pieces, and the plurality of first connection portions and the plurality of connecting pieces are alternately spaced apart in a circumferential direction of the first connection region.

8. The current collector according to claim 7, wherein a value of a circumferential distance between the first connection portion and an adjacent connecting piece ranges from 0.5 mm to 2 mm.

9. The current collector according to any one of claims 1 to 8, wherein the orthographic projection of the outer peripheral wall of the current collector on the first plane is located on the circle, the first plane is perpendicular to the thickness direction of the current collector, a minimum value of a radius of the outer peripheral wall of the current collector is R₁, and a value of R₁ ranges from 10 mm to 100 mm; and
a maximum value of a radius of an outer peripheral wall of the first connection region is greater than or equal to half of the minimum value of the radius of the outer peripheral wall of the current collector and less than the minimum value of the radius of the outer peripheral wall of the current collector, that is, the maximum value R₂ of the radius of the outer peripheral wall of the first connection region and R₁ meet the following condition: ½R₁≤R₂<R₁.

10. The current collector according to claim 9, wherein a radial width of the second connection portion is W₁, and the radial width of the second connection portion is greater than or equal to 1 mm and less than or equal to half of the minimum value of the radius of the outer peripheral wall of the current collector, that is, 1 mm≤W₁≤½R₁.

11. The current collector according to any one of claims 1 to 10, wherein the orthographic projection of the outer peripheral wall of the current collector on the first plane is located on the circle, the first plane is perpendicular to the thickness direction of the current collector, the second connection portion is provided with a stop protrusion extending toward the first connection portion, the stop protrusion is located on a radially outer side of the first connection portion, and the stop protrusion is adapted to be located on a radially outer side of a tab of the jelly roll.

12. The current collector according to claim 11, wherein the stop protrusion is defined through bending and deformation of a part of the second connection portion.

13. The current collector according to claim 11 or 12, wherein a reinforcement portion is provided on an outer periphery of the stop protrusion.

14. The current collector according to claim 13, wherein there are a plurality of reinforcement portions, and the plurality of reinforcement portions are spaced apart to form an avoidance port between two adjacent reinforcement portions for gas flow.

15. The current collector according to any one of claims 1 to 14, wherein the middle portion is provided with a liquid injection port that extends through the middle portion in a thickness direction of the middle portion.

16. The current collector according to any one of claims 1 to 15, wherein a first limiting portion is provided on the second connection portion, and the first limiting portion is adapted to be in limiting fit with a second limiting portion on the cover plate.

17. A battery cell, comprising:
a casing, wherein an accommodation cavity with an opening is formed in the casing;
a jelly roll and a cover plate, wherein the jelly roll is disposed in the accommodation cavity, and the cover plate is disposed at the opening; and
a current collector, wherein the current collector is the current collector according to any one of claims 1 to 16, the current collector is disposed between the jelly roll and the cover plate, the first connection portion is electrically connected to the jelly roll, the second connection portion is electrically connected to the cover plate, and the cover plate is adapted to drive the second connection portion to move relative to the first connection region.

18. The battery cell according to claim 17, wherein the orthographic projection of the outer peripheral wall of the current collector on the first plane is located on the circle, the first plane is perpendicular to the thickness direction of the current collector, the second connection portion is provided with the stop protrusion extending toward the first connection portion, the stop protrusion is located on the radially outer side of the first connection portion, and the stop protrusion is located on the radially outer side of the tab of the jelly roll.

19. A battery pack, comprising a plurality of battery cells according to claim 17 or 18.

20. A power consuming apparatus, comprising the battery pack according to claim 19.
